# EUROPEAN PATENT SPECIFICATION

(11) **EP 1 174 035 B1**
(45) Date of publication and mention of the grant of the patent: **09.11.2005**
(21) Application number: 01107816.9
(22) Date of filing: 06.04.2001
(51) Int. Cl.: A22C 7/00, A22C 11/00

(54) **Meat sausage, procedure to make it and installation for the undertaking of said procedure**
Vorrichtung und Verfahren zur Herstellung von Wurst
Appareil et méthode de production de saucisses

(30) Priority: 18.07.2000 ES 200001925; 23.02.2001 ES 200100442
(43) Date of publication of application: 23.01.2002
(73) Proprietor: Mataderos Industriales Soler, S.A., 29580 Cartama-Estacion (Malaga) (ES)
(72) Inventor: Soler Perez, Ramon, 29580 Cartama- Estacion (Malaga) (ES)
(74) Representative: Wehnert, Werner

(56) References cited:
- CH-A- 657 507
- DE-A- 3 315 311
- US-A- 4 434 528
- US-A- 4 658 718
- US-A- 5 468 179
- US-A- 6 050 888

## Description

The invention concerns the procedure for the elaboration of a sausage and an installation for the undertaking of said procedure. A simular procedure is described in US 5468179.

The scope of the invention application is the fabrication of meat sausages.

### BACKGROUND OF THE INVENTION

Conventionally, all types of sausages, be they smoked pork sausage, salami, etc. adopt a cylindrical or almost cylindrical shape from which slices are cut for their consumption.

Evidently, and for the making of a sandwich with a certain doses of sausage, it will be necessary to use a number of slices the larger the smaller the initial diameter of the sausage.

To facilitate this operation for the consumer, it is widely known since time ago the marketing of sliced sausage, usually vacuum-packed in plastic bags, in such a way that the user has to just open the bag and proceed to move the slices to the mini-baguette, or bread slice with which the sandwich is complemented.

In this same line of simplification and given that the majority of sausages are made using synthetic tripe, essentially cellulose-based, which can adopt any configuration, it is also known the use of tripe of considerable diameter, and even the diagonal cut of the sausage slices, to increase the size of the slices, but this solution is insufficient from the longitudinal point of view, in a way that the largest the slice size can never cover the length of the bread slice, and the shortest length can be excessive substantially larger than the bread slice.

### DESCRIPTION OF THE INVENTION

The meat sausage obtained by the invention has been conceived in order to solve in a fully satisfactory way the problematic described above, in such a way that it can be fragmented into slices of any adequate given thickness, with the slice size being the right one so that only one of them covers a classic piece of bread used for the making of a sandwich, for example the mini-baguettes cited above.

For this purpose, and in more concrete way the sausage that is recommended, with an indefinite length like any conventional sausage, focuses its characteristics on the fact that its section tends to the rectangular one, considerably elongated, in such a way that its length and width adjust dimensionally to an open mini-baguette, which allows for the having of a sandwich in a particularly quick and easy way, by the use of one only sausage slice.

From this basic structure for the sausage, it is feasible that it is marketed in a single piece or cut in slices and vacuum-packed or packed in a modified atmosphere or in any other kind of package, the common distribution lines of classic sausages.

The invention concerns the procedure of making this special kind of sausage, procedure in which, going from the use at the end of the sausage-maker of a funnel or mouthpiece with the same approximate rectangular configuration, around which the wrapping tripe is attached, consists in having the sausage product subjected to, immediately after the sausage-making procedure itself, a phase of pressing that results is a compressed matter which mends the tendency to the cylindrical configuration generated by the pressure of the meat inside the tripe, to achieve that the sausage adopts the intended approximately rectangular of rounded edges section.

Next, the sausage pieces thus obtained, obviously sealed on both ends, by the means of some rope or bent inwards are stored in a horizontal or vertical position, more specifically with the aid of supports that keep the pieces physically independent from each other, conveniently separated for the right airing and subject to some pressure that facilitates their volumetric contraction during the meat dehydration, or which holds them stable during the boiling.

For taking said procedure into practice and from any conventional sausage maker a funnel or mouthpiece of an approximated rectangular section is used, considerable elongated in the transversal direction, at whose end and with the right separation between the mouthpiece and them to allow the sealing of the trip, two frames of rollers, conveyor belts, or similar devices are placed, superposed, on which the rollers are mounted with freedom of rotation over their respective supports, which are conveniently separated, with a little convergence at the opposite end form the funnel, in order to get between them the sausage piece and facilitating its displacement, generate on it a vertical pressure to amend the tendency to become round during the sausage making and so that it finally presents the foreseen section.

The installation is complemented with a cage formed by a metallic frame, which is capable of receiving inside, correctly placed, a number of piled up grids, each one of them provided with separator ends, in such a way that on each grid a fixed number of sausage pieces are placed, sensibly distant from one another, with each grid size being their optimum occupation by the sausage pieces.

The cage is completed with the corresponding grids that will alternately be empty and full so that the sausage pieces are conveniently spaced thus allowing for their optimum airing, when they are destined for curing, and all of them being full when they are destined for boiling, and the cage is complemented with an upper surface that, displaceable with the aid of bolts attached to the upper part of the vertical frame parts of said metallic frame, in such a way that the bolts being tight determine a deformation or flattening of the sausage pieces until they are of the foreseen thickness, which is set by the height of the stops, in such a way said grids keep a pressure on the sausage pieces that is kept constant until an advanced degree of dehydration of the meat has been reached, or during their boiling.

Said grids are made out of rods of a very small diameter, properly distant to facilitate the airing of the sausage pieces, but with the enough structural rigidity so that the deformations due to the load they bear are minimal.

### DESCRIPTION OF THE DRAWINGS

To complement the description under way and with the goal of helping to get a better understanding of the invention characteristics, according to a preferred example of its practical realization, it is attached as an integral part of said description a set of drawings where as a non-limiting illustrative the following has been represented:
Fig.1 and Fig.1A.- Show, according to the perspective view, a meat sausage made according to the improvements object of the invention, in its initial situation, as a single piece body.
Figure 2.- Shows, again according to the perspective view, the same sausage as in the previous figure after its being cut in slices and having being vacuum-packed in a plastic bag.
Figure 3.- Shows, finally and according to a breaking up in perspective, a sliced achieved from the sausage from the previous figures, confronted to the two halves of the mini-baguette for the making of a sandwich.

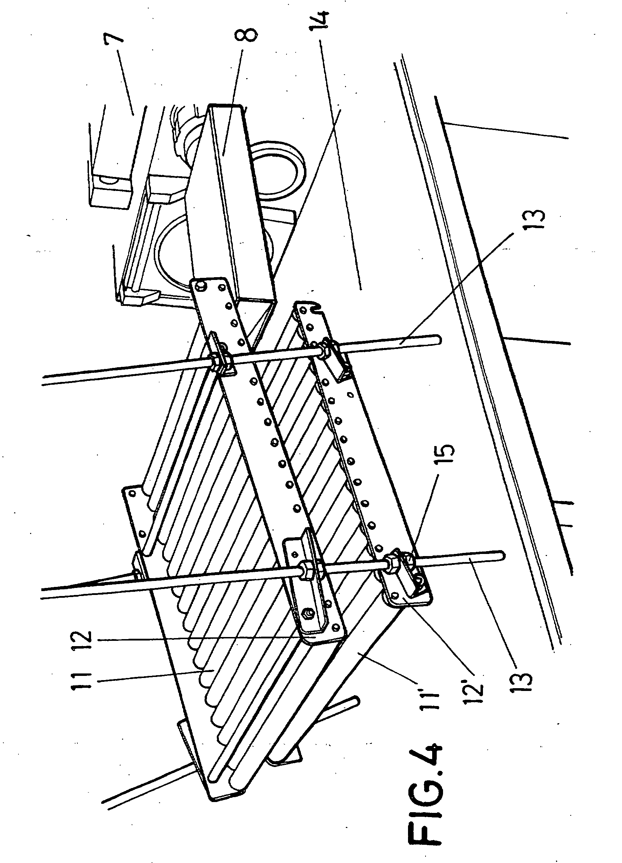

Figure 4.- Shows, according to the perspective view, a partial view of a classic sausage making machine, to which the special mouthpiece is attached
Figure 5.- Shows another perspective of the set represented in the previous figure, now in functioning phase, that is, in the phase of making a sausage piece.
Figure 6.- Shows a perspective view of the large cage which complements said installation, ready for vacuum, and provided only with the lower grid.
Figure 7.- Shows a detail of one of the grids that are included in the large cage of the previous figure.
Figure 8.- Shows, in turn, a detail of one of the stops of said grids.
Figure 9.- Shows, finally, and also according to a perspective view, the large cage of Figure 6 appropriately loaded.

### PREFERRED EMBODIMENT OF THE INVENTION

By looking at the aforementioned figures, it can be seen that the meat sausage that the invention proposes is constituted, just like any conventional sausage, by a meat nucleus (1/1A), of chorizo, salami or any other kind, and a tubular wrapper (2), preferably made out of cellulose-based synthetic tripe, sealed at the ends by the classic knots (3).

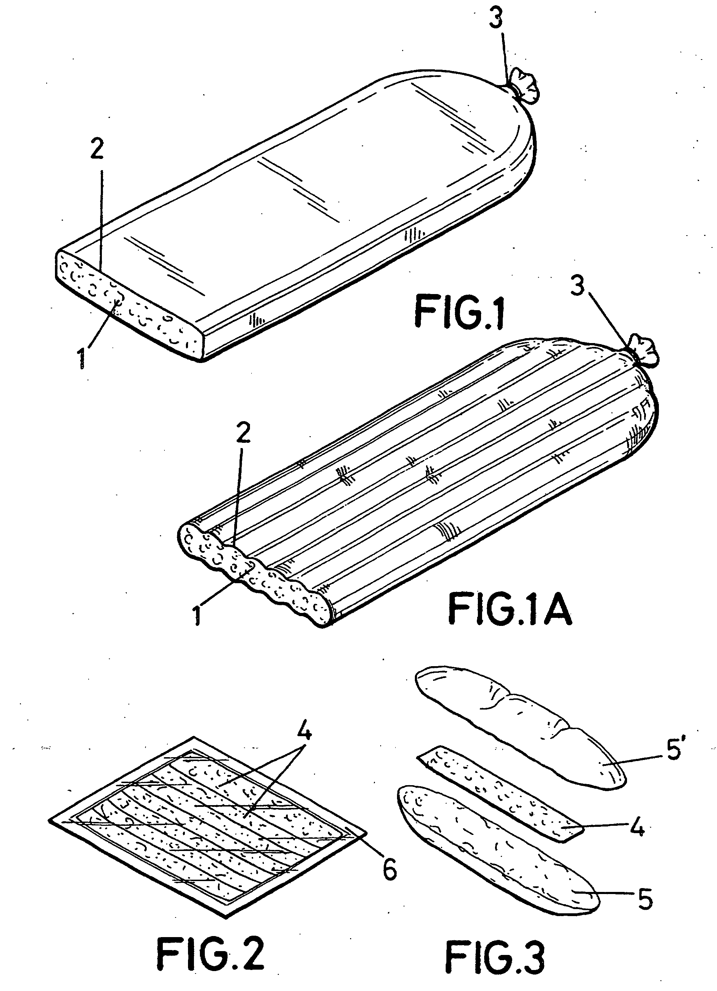

Therefore, according to the invention of the recommended sausage, it focuses its characteristics on the fact that the section of said set and since it can be inferred from looking at Figures 1 and 1A, where the sausage piece appears cut or, adopts an approximately rectangular configuration considerably elongated, with a length of, for example, 20 centimeters and a width of 4 centimeters, which allows the getting slices (4) with rectangular configuration and the sizes aforementioned, which with a single slice allows the making of a sandwich, since it matches the size of a mini-baguette (5-5') or any other piece of bread of those commonly used in the making of sandwiches, as those shown in Figure 3, keeping in mind that these sizes are for example purposes only and will be changed according to the type of bread piece foreseen for the sausage consumption.

According to this configuration and as has been explained above, the sausage can get to the consumer in a single piece or a stick as it is portrayed in Figures 1 and 1A, or it can be presented already cut in slices (4), partially superposed and placed inside a plastic bag (6), which is flat and hermetically sealed, as shown in Figure 2, without having the presentation any effect on the essence of the invention.

In any case, a significant handling simplification is achieved in the making of a sandwich, because by cutting from the single-piece stick of Figures 1 and 1A it will suffice to cut just one single slice for making said sandwich, and if coming from the plastic bag (6) of Figure 2 it will in turn be necessary to take out just one single slice from the bag to achieve the same result.

It has just to be added that, as it is evident, the length of the stick section does not have to match the effective length of the slices (4), since they can be gotten by cutting them in diagonal out of the initial stick, just like it is conventionally made with the cylindrical or sensibly cylindrical sausage sticks.

For the getting of the sausage pieces described an installation has been foreseen in which any conventional appropriate sausage-making machine can partake (7), part of the use of a funnel or extrusion mouthpiece (8) of approximately rectangular section, considerably flat, that couples as it is conventional and by screwing to the exit of the sausage-making machine (7) and that is also conventional presents an adequate length to allow the attaching, around itself, of a tripe (9) segment whose open end will be subjected to some type of sealing (10) that will clog one of the ends of the sausage piece.

Immediately next to the mouthpiece (8) and appropriately apart from it, two roller platforms or belts (11-11') mounted with rotation freedom around their respective supports (12-12') of adjustable positioning over support rods (13) that rest on the output platform (14) of the extrusion machine (7) and which are provided with bolt and counterbolt sets (15) to regulate the height of the lower belts or lower roller platform (11') with respect to the mouthpiece or funnel (8) and to distance conveniently the upper belt or upper roller platform (11) with respect to the lower (11') ones, in parallel disposition or with a slight divergence towards the mouthpiece or funnel (8) that facilitates the penetration of the sausage piece inside.

These belts or roller platforms (11-11') have the goal, as it has been pointed out above, to amend the tendency of the sausage piece (16) to become cylindrical at the end of the funnel (8), causing its squashing that shapes it closer to its definitive foreseen configuration.

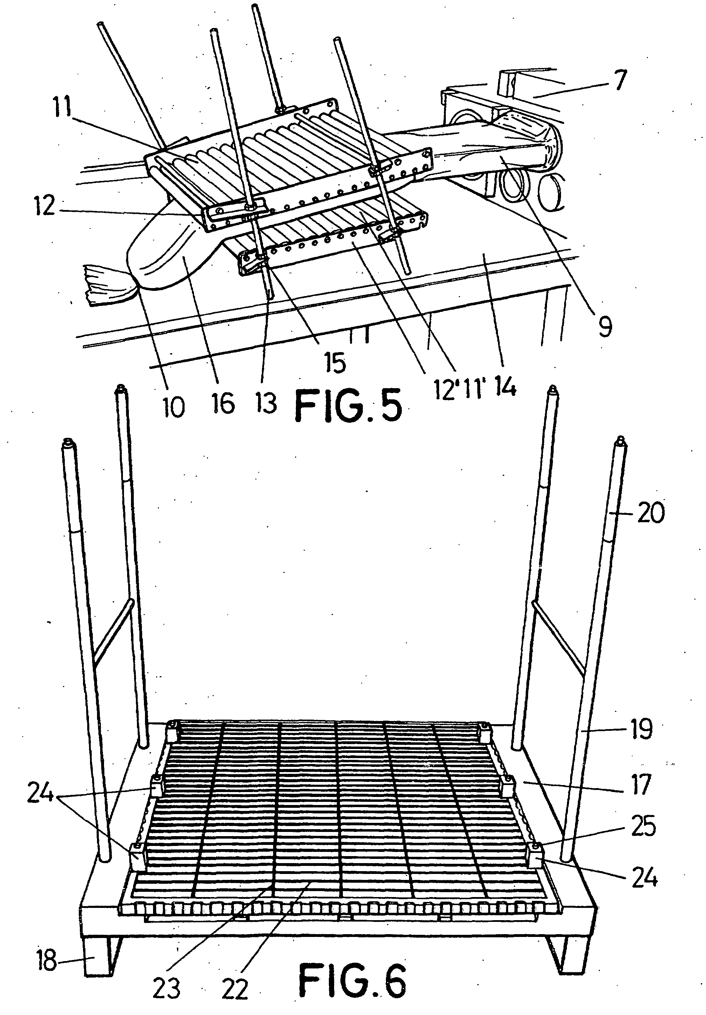

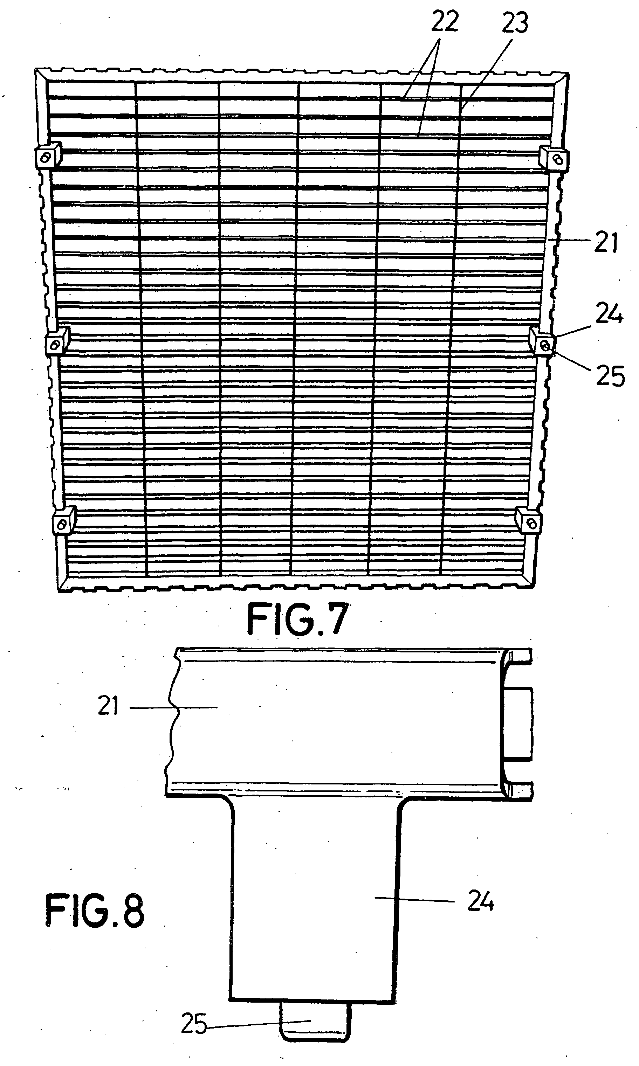

With the described structure, a cage collaborates, which is represented in Figure 6, structured by the base platform of Figure 7 with legs (18) (see Figure 6) to stand on the floor, structure (17) from which vertical parts (19) emerge, preferably cylindrical, provided in any case with an extreme sector and superior (20) screwed, with a goal to be described later.

The base platform of Figure 7 is destined to receive a number of grids (21) structured with platens or rods (22) of small diameter, for instance three millimeters, notably distant to facilitate the airing of the sausage pieces (16) that will go on them, collaborating with them rigidity givers (23) which avoid unwanted deformations against the pressures that they have to stand.

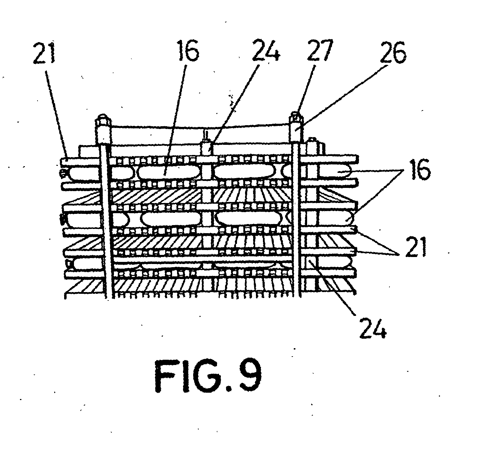

These grids (21), in combination with the sausage pieces themselves (16), will adequately be dimensioned to receive a number of pieces (16) with an optimal use of the surface of said grid, in which, however, said pieces (16) will lay out conveniently separated in the same line to facilitate its airing, allowing for instance the disposition of four pieces on them, as shown in Figure 9.

The grids (21) also incorporate, in their marginal zones, separator stops (24) that separate their piling up and which are provided with a small swelling (25) which acts as the center of said piling up.

The stops (24) present the adequate height to the thickness foreseen for the sausage pieces (16).

Given that the sausage pieces (16) when coming out of the roller platforms (8) present a thickness a little larger than the definitive one and can also be deformed by their own manipulation in their course to the grids (21), there is an upper surface (26) that partakes in the large cage that is displaceable over the vertical parts (20) by the effect of their respective bolts (27) mounted on the screwed ends (20) of the parts (19), in such a way that the pressure that the surface (26) makes causes the approximation between grids, with the consequent deformation of the sausage pieces (16) until the limit situation defined by the stops (24).

As it can be seen in Figure 9, the grid load (21) will be made in an alternate way, in such a way that at the top of the cage empty and full surfaces are placed, so that the sausage pieces (16) remain sufficiently distant in height to facilitate their optimum airing.

Nevertheless, when the sausage is destined for boiling, it will be possible that all the surfaces placed at the top of the cage be loaded, because the distance forced between them by the grids is sufficient to allow the circulation of the water used for boiling.

## Claims

1. A method of making a meat sausage, comprising the following steps:
feeding a meat nucleus (1) from a meat extrusion machine (7) through a funnel (8) around which a wrapping tripe (2) is attached and which is of an elongated rectangular cross-section, the length of which is about five times its width,
subjecting the sausage product immediately after its extrusion from the funnel (8) to pressure by two roller platforms or belts (11, 11') immediately next to the funnel (8) and spaced from each other in parallel disposition to or with a slight divergence towards the funnel (8) in order to counteract its tendency to assume a cylindrical configuration under the influence of pressure of the meat inside the wrapping tripe (2), and
storing sausage pieces (16) of the sausage product obtained thereby in horizontal or vertical disposition upon supports so that they are separated to leave substantially all of their outer surfaces free for airing while they are subjected to some pressure to facilitate their volumetric contraction during dehydration thereof.

2. An installation for making a meat sausage by the method of claim 1, comprising:
a meat extrusion machine (7) for feeding a meat nucleus (1) through a funnel (8) around which a wrapping tripe (2) is attached and which is of an elongated cross-section, the length of which is about five times its width.
a pressure station for subjecting the sausage product immediately after its extrusion from the funnel (8) to pressure by two roller platforms or belts (11,11') immediately next to the funnel (8) and spaced from each other in parallel disposition to or with a slight divergence towards the funnel (8) in order to counteract its tendency to assume a cylindrical configuration under the influence of pressure of the meat inside the wrapping tripe (2), and
a storage area for storing sausage pieces (16) of the sausage product obtained thereby in horizontal or vertical disposition upon supports so that they are separated to leave substantially all of their outer surfaces free for airing while they are subjected to some pressure to facilitate its volumetric contraction during hydration thereof.

3. An installation according to claim 4, wherein said storing area comprises a drying or boiling cage having a base platform (17) on which a number of grids (21) are placed.

4. An installation according to claim 3, wherein the rollers (11, 11') or belts are mounted with freedom of rotation about respective supports (12, 12') that can be position regulated via support rods (13) supported on an output platform (14) of the extrusion machine (7), said support rods being provided with bolts and counterbolts (15) to regulate the height of the lower roller platform (11') or belt with respect to the funnel (8) and the spacing of the upper roller platform (11) or belt with respect to the lower one (11'), with a slight divergence towards the funnel (8) to facilitate penetration of the sausage pieces (16) therebetween.

5. An installation according to claim 3 or 4, wherein the cage is provided with a base platform (17) having support legs (18) to stand on the ground and vertical parts (19) extending therefrom, piled up grids (21) being placed therebetween.

6. An installation according to claim 5, wherein each grid (21) is provided with a base of a number of rods or platens (22) of small diameter or cross-section spaced to facilitate airing of sausage pieces (16) of the sausage product or watering thereof during boiling, and stiffened by rigidity givers (23), said grids (21) being dimensionally adapted to receive a plurality of sausage pieces (16) with optimum use of the grid surface, while avoiding that the sausage pieces (16) touch one another.

7. An installation according to claim 6, wherein the grids (21) incorporate in their marginal zones separator stops (24) that separate them in their piling up and are of a height adapted to the thickness of the sausage pieces (16).

8. An installation according to claim 7, wherein the vertical parts (19) of the cage each incorporate an upper threaded sector (20) engaged by bolts (27) acting upon an upper surface (26) to cause the grids (21) to move closer towards each other, resulting in deformation of the sausage pieces (16) to their final condition defined by the stops (24).

## Patentansprüche

1. Verfahren zum Herstellen einer Wurstware, das die folgenden Schritte aufweist:
Zuführen eines Fleischkerns (1) aus einer Fleischextrusionsmaschine (7) durch einen Trichter (8), um den eine Umhüllung (2) befestigt ist und der einen länglichen rechteckigen Querschnitt aufweist, dessen Länge ungefähr 5mal so groß ist wie dessen Breite,
Beaufschlagen des Wurstprodukts mit Druck unmittelbar nach der Extrusion durch den Trichter (8) mit Hilfe von zwei Rollenplattformen oder Fließbändern (11, 11'), die unmittelbar angrenzend an den Trichter (8) und in einer parallelen Anordnung voneinander beabstandet oder mit einer leichten Divergenz zueinander in Richtung des Trichters (8) angeordnet sind, um der Tendenz des Wurstprodukts entgegenzuwirken, eine zylindrische Form unter dem Einfluss des Drucks durch das Fleisch im Inneren der Umhüllung (2) anzunehmen, und
Lagern der dadurch erhaltenen Wurststücke (16) des Wurstprodukts in einer horizontalen oder vertikalen Anordnung auf Unterstützungen, so dass sie getrennt voneinander angeordnet sind, um im Wesentlichen ihre gesamte Oberfläche zum Trocknen freizulegen, während sie einem gewissen Druck ausgesetzt sind, um ihre Volumenverkleinerung während ihres Trocknens zu erleichtern.

2. Vorrichtung zum Herstellen einer Wurstware aus Fleisch durch das Verfahren gemäß Anspruch 1, das die folgenden Merkmale aufweist:
eine Fleischextrusionsmaschine (7) zum Zuführen eines Fleischkerns (1) durch einen Trichter (8), um den eine Umhüllung (2) befestigt ist und der einen länglichen Querschnitt aufweist, dessen Länge ungefähr 5mal so groß ist wie dessen Breite,
eine Druckstation zum Ausüben eines Drucks auf das Wurstprodukt unmittelbar nach seinem Auspressen aus dem Trichter (8) durch zwei Rollenplattenformen oder Fließbänder (11, 11'), die unmittelbar nach dem Trichter (8) und in einer parallelen Anordnung oder mit einer leichten Divergenz in Richtung des Trichters (8) voneinander beabstandet sind, um der Tendenz des Wurstprodukts entgegenzuwirken, eine zylindrische Form unter dem Einfluss des Drucks des Fleischs im Inneren der Verpackungshülle (2) anzunehmen, und
ein Lagergebiet zum Lagern der dadurch erhaltenen Wurststücke (16) des Wurstprodukts in einer horizontalen oder vertikalen Anordnung auf Unterstützungen, so dass sie voneinander getrennt sind, um im Wesentlichen ihre gesamte äu-βere Oberfläche zur Belüftung freizulegen, während sie einem gewissen Druck ausgesetzt sind, um das Zusammenziehen des Volumens während ihres Trocknens zu erleichtern.

3. Vorrichtung gemäß Anspruch 4, in der das Lagergebiet einen Trocknungs- oder Kochkäfig mit einer Basisplattform (17) aufweist, auf der eine Anzahl von Gittern (21) angeordnet ist.

4. Vorrichtung gemäß Anspruch 3, in der die Rollen (11, 11') oder Fließbänder mit einer Rotationsfreiheit um die jeweiligen Unterstützungen (12, 12') befestigt sind, deren Position über Unterstützungsstangen (13) eingestellt werden kann, die an der Ausgabeplattform (14) der Extrusionsmaschine (7) befestigt sind, während diese Unterstützungsstangen mit Bolzen und Gegenbolzen (15) bereitgestellt sind, um die Höhe der unteren Rollerplattform (11') oder des Fließbands im Verhältnis zu dem Trichter (8) und die Beabstandung der oberen Rollerplattform (11) oder des Fließbands im Verhältnis zu der unteren Rollerplattform oder dem unteren Fließband (11') mit einer leichten Divergenz in Richtung des Trichters (8) einzustellen, um das Eindringen des Wurststücks (16) dazwischen zu erleichtern.

5. Vorrichtung gemäß Anspruch 3 oder 4, in der der Käfig mit einer Basisplattform (70) mit Unterstützungsbeinen (18) bereitgestellt wird, um auf dem Boden zu stehen, und in der der Käfig sich davon erstreckende vertikale Elemente (19) aufweist, zwischen denen gestapelte Gitter (21) angeordnet sind.

6. Vorrichtung gemäß Anspruch 5, in der jedes Gitter (21) mit einer Basis aus einer Anzahl von Stangen oder Traversen (22) kleinen Durchmessers oder Querschnitts bereitgestellt ist, die beabstandet sind, um das Belüften der Wurststücke (16) des Wurstprodukts oder das Wässern der Wurststücke während des Kochens zu erleichtern, und die durch Steifigkeitsgeber (23) versteift sind, während die Gitter (21) in ihrer Dimension angepasst sind, um eine Mehrzahl von Wurststücken (16) unter optimaler Ausnutzung der Gitteroberfläche aufzunehmen, während verhindert wird, dass sich die Wurststücke (16) gegenseitig berühren.

7. Vorrichtung gemäß Anspruch 6, in der die Gitter (21) in ihren Randzonen Trennungsstopper (24) beinhalten, die sie in ihrer Stapelung trennen und die eine Höhe aufweisen, die an die Dicke der Wurststücke (16) angepasst ist.

8. Vorrichtung gemäß Anspruch 7, in der die vertikalen Elemente (19) des Käfigs jeweils einen oberen Sektor mit Gewinde (20) beinhalten, der im Eingriff mit Bolzen (27) ist, die über eine obere Oberfläche (26) derart einwirken, dass sich die Gitter (21) näher zueinander hin bewegen, was in eine Deformation der Wurststücke (16) in ihren abschließenden Zustand resultiert, die durch die Stopper (24) definiert ist.

## Revendications

1. Procédé de fabrication d'une saucisse, comprenant les étapes suivantes :
introduire un noyau de chair (1) provenant d'une machine d'extrusion de chair (7) à travers un entonnoir (8) autour duquel un boyau d'enveloppement (2) est attaché et qui a une section transversale rectangulaire allongée, dont la longueur est environ cinq fois sa largeur,
soumettre le produit à base de saucisse immédiatement après son extrusion de l'entonnoir (8) à une pression par deux plateformes à rouleau ou tapis (11, 11') immédiatement après l'entonnoir (8) et espacées l'une de l'autre selon une disposition parallèle à ou avec une légère divergence vers l'entonnoir (8) afin de contrer sa tendance à prendre une configuration cylindrique sous l'influence de la pression de la chair à l'intérieur du boyau d'enveloppement (2), et
stocker les pièces de saucisse (16) du produit à base de saucisse obtenu ainsi selon une disposition horizontale ou verticale sur des supports de sorte qu'elles soient séparées pour laisser libre sensiblement la totalité de leurs surfaces externes pour une ventilation tandis qu'elles sont soumises à une certaine pression pour faciliter leur contraction volumétrique au cours de leur déshydratation.

2. Installation pour fabriquer une saucisse par le procédé selon la revendication 1, comprenant :
une machine d'extrusion de chair (7) pour introduire un noyau de chair (1) au travers d'un entonnoir (8) autour duquel un boyau d'enveloppement (2) est fixé et qui a une section transversale allongée, dont la longueur est d'environ cinq fois sa largeur,
une station de pression pour soumettre le produit à base de saucisse immédiatement après son extrusion du tunnel (8) à une pression par deux plateformes à rouleau ou tapis (11, 11') immédiatement après l'entonnoir (8) et espacées l'une de l'autre selon une disposition parallèle à ou avec une légère divergence vers l'entonnoir (8) afin de contrer sa tendance à prendre une configuration cylindrique sous l'influence de la pression de la chair à l'intérieur du boyau d'enveloppement (2), et
une zone de stockage pour stocker des pièces de saucisse (16) du produit à base de saucisse obtenu ainsi selon une disposition horizontale ou verticale sur des supports de sorte qu'elles soient séparées pour laisser libre sensiblement la totalité de leur surfaces externes pour une ventilation tandis qu'elles sont soumises à une certaine pression pour faciliter leur contraction volumétrique au cours de leur déshydratation.

3. Installation selon la revendication 2, dans laquelle ladite zone de stockage comprend une cage de séchage ou d'ébullition ayant une plateforme de base (17) sur laquelle un certain nombre de grilles (21) sont placées.

4. Installation selon la revendication 3, dans laquelle les rouleaux (11, 11') ou les tapis sont montés de manière à ce qu'ils aient une liberté de rotation autour de supports respectifs (12, 12') dont on peut réguler la position à l'aide de tiges de support (13) soutenues sur une plateforme de production (14) de la machine d'extrusion (7), lesdites tiges de support étant fournies avec des boulons et des contreboulons (15) pour régler la hauteur de la plateforme à rouleau inférieure (11') ou du tapis inférieur par rapport à l'entonnoir (8) et l'espacement de la plateforme à rouleau supérieure (11) ou du tapis supérieur par rapport à l'inférieur(e) (11'), avec une légère divergence vers l'entonnoir (8) pour faciliter la pénétration des pièces de saucisse (16) entre elles ou eux.

5. Installation selon la revendication 3 ou 4, dans laquelle la cage est fournie avec une plateforme de base (17) ayant des pieds supports (18) pour tenir sur le sol et des parties verticales (19) s'étendent depuis celle-ci, des grilles empilées (21) étant placées entre elles.

6. Installation selon la revendication 5, dans laquelle chaque grille (21) est fournie avec une base d'un certain nombre de barreaux ou de rouleaux (22) de petit diamètre de petite section transversale espacés de manière à faciliter la ventilation des pièces de saucisse (16) du produit à base de saucisse ou de l'irrigation de celles-ci au cours de l'ébuilition, et rigidifiés par des tuteurs rigides (23), lesdites grilles (21) étant adaptées en terme de dimension pour recevoir une pluralité de pièces de saucisse (16) avec une utilisation optimale de la surface des grilles tout en évitant que les pièces de saucisse (16) se touchent.

7. Installation selon la revendication 6, dans laquelle les grilles (21) incorporent dans leurs zones marginales des butées de séparation (24) qui les séparent dans leur empilement et qui sont d'une hauteur adaptée à l'épaisseur des pièces de saucisse (16).

8. Installation selon la revendication 7, dans lequel les parties verticales (19) de la cage incorporent chacune un secteur fileté supérieur (20) sur lequel s'engagent des boulons (27) agissant sur une surface supérieure (26) pour que les grilles (21) se rapprochent les unes des autres, ce qui se traduit par une déformation des pièces de saucisse (16) en leur état final défini par les butées (24).
